# EUROPEAN PATENT SPECIFICATION

(11) **EP 3 222 839 B1**
(45) Date of publication and mention of the grant of the patent: **21.06.2023**
(21) Application number: 17162934.8
(22) Date of filing: 24.03.2017
(51) Int. Cl.: F02D 41/14, F02D 41/40, F02D 35/02

(54) **METHOD TO CONTROL THE COMBUSTION NOISE GENERATED BY A SPONTANEOUSLY-STARTED INTERNAL COMBUSTION ENGINE**
VERFAHREN ZUR STEUERUNG DES DURCH EINE SPONTAN GESTARTETE BRENNKRAFTMASCHINE ERZEUGTEN VERBRENNUNGSGERÄUSCHES
PROCÉDÉ POUR RÉGULER LE BRUIT DE COMBUSTION PRODUIT PAR UN MOTEUR À COMBUSTION INTERNE DÉMARRÉ SPONTANÉMENT

(30) Priority: 25.03.2016 IT UA20162046
(43) Date of publication of application: 27.09.2017
(73) Proprietor: Marelli Europe S.p.A., 20011 Corbetta (MI) (IT)
(72) Inventor: DE CESARE, Matteo, 71017 TORREMAGGIORE (IT); STOLA, Federico, 40138 BOLOGNA (IT); PONTI, Fabrizio, 47011 Castrocaro Terme (FC) (IT); RAVAGLIOLI, Vittorio, 47121 FORLI' (IT)
(74) Representative: Musconi, Roberta

(56) References cited:
- EP-A2- 1 219 805
- EP-A2- 1 316 704
- FR-A1- 2 886 678
- FR-A1- 2 899 283
- FR-A1- 2 899 939
- US-A1- 2014 012 487

## Description

### Technical field

The present invention relates to a method to control the combustion noise generated by a spontaneously-started internal combustion engine.

### Prior art

Internal combustion engines with spontaneous ignition of the fuel (i.e. internal combustion engines operating according to the "Diesel" cycle and powered by diesel fuel or the like) comprise a number of injectors, each of which injects the fuel into a respective cylinder. The cylinders are arranged in line and house a piston mechanically connected by a connecting rod to an engine crankshaft to transmit to the same crankshaft the force generated by the combustion inside the cylinder.

The spontaneously-started internal combustion engine is controlled by an electronic control unit, which supervises the operation of all the components of the internal combustion engine.

An extremely relevant control parameter in spontaneously-started internal combustion engines is the combustion noise that is generated by the pressure increase inside the cylinder as a result of the combustion and that acts on the crown end and on the walls of the cylinder and on the piston, which then transmit it to the connecting rods and to the crankshaft, thus generating additional noise. Being intimately related to combustion, the combustion noise varies based on the number of cylinders, the speed of rotation and the type of combustion occurring inside the cylinders.

Usually, for detecting the combustion noise generated by each cylinder, in a setup step each cylinder is provided with a respective pressure sensor, usually arranged in the housing for the pre-heating candle and configured to detect the pressure waves generated by the compressed gases inside the cylinder for each combustion cycle.

The signal detected by each pressure sensor is then processed to provide information about the combustion noise. The combustion noise is in fact proportional to the derivative over time of the value of the pressure inside the combustion chamber. The document US7904231 discloses, for example, a method to control the combustion noise in a spontaneously-started internal combustion engine comprising the steps of detecting the pressure in the combustion chamber of a cylinder of the spontaneously-started internal combustion engine; determining a level of combustion noise based on the measurement of the pressure in the cylinder; and changing a combustion control parameter based on the level of the detected combustion noise.

The use of such pressure sensors in a setup step, however, does not allow a real-time detection of the combustion noise.

In order to solve this problem it has been proposed the arrangement of facing pressure sensors in the combustion chamber to directly measure the pressure inside the cylinders during the normal operation of the spontaneously-started internal combustion engine; however, such pressure sensors are extremely expensive and have a limited reliability over time, being therefore unsuitable to an extensive use in series cars.

Moreover, the pressure sensors can only detect one component of the combustion noise, namely the noise generated by the combustion inside the combustion chambers of the cylinders, but cannot detect the component of the combustion noise generated by the transmission through the other components of the spontaneously-started internal combustion engine.

In order to overcome these drawbacks, the document EP1219805 discloses e.g. a method to control the combustion noise generated by a spontaneously-started internal combustion engine provided with a number of cylinders and comprising a sensor, usually an accelerometer, to detect the intensity of the combustion noise generated by the combustion in the cylinders and preferably arranged in a position facing and close to the cylinders. The method provides detecting by means of the sensor the intensity of the combustion noise generated by the combustion in the cylinders during the normal operation of the spontaneously-started internal combustion engine; calculating a reference combustion noise; and choosing between a single main injection or a multi-injection mode to generate the reference combustion noise by means of a feedback control using as a feedback variable the intensity of the combustion noise generated by the combustion in the cylinders and detected by the sensor.

The document US2014012487 discloses a method to control the combustion noise generated by an internal combustion engine that provides determining the intensity of the combustion noise generated by the combustion in the cylinders during the normal operation of the internal combustion engine; determining a reference combustion noise; and choosing between a single main injection or a plurality of injections to generate the reference combustion noise. Document FR2886678 relates to a method to control the combustion noise generated by a spontaneously-started internal combustion engine.

However, the aforesaid methods providing a choice between a single main injection or a multi-injection mode do not allow controlling the combustion noise efficiently (i.e. with an adequate accuracy) and effectively (i.e. quickly and without engaging an excessive computing power).

### Description of the invention

The object of the present invention is to provide a method to control the combustion noise generated by a spontaneously-started internal combustion engine, which does not have the drawbacks of the state of the art and, in particular, is easy and inexpensive to implement. According to the present invention, it is provided a method to control the combustion noise generated by a spontaneously-started internal combustion engine as claimed in the appended claims.

### Brief description of the drawings

The present invention will now be described with reference to the accompanying drawings showing a non-limiting embodiment, wherein:
- Figure 1 is a schematic view of a spontaneously-started internal combustion engine provided with a control unit implementing the method object of the present invention;
- Figure 2 shows the pressure trend inside a cylinder of Figure 1 based on the engine angle in case of both a single-injection and a multi-injection mode;
- Figure 3 shows the heat release trend inside a cylinder of Figure 1 based on the engine angle in case of both a single-injection and a multi-injection mode;
- Figure 4 shows seven different sequences of injections alternating single-injection and multi-injection modes;
- Figure 5 shows the noise, the particulate and NOx emissions released in the seven different sequences of injections of Figure 4; and
- Figure 6 shows the trend over time of the reference noise and of the detected noise based on the seven different sequences of injections of Figure 4.

### Preferred embodiments of the invention

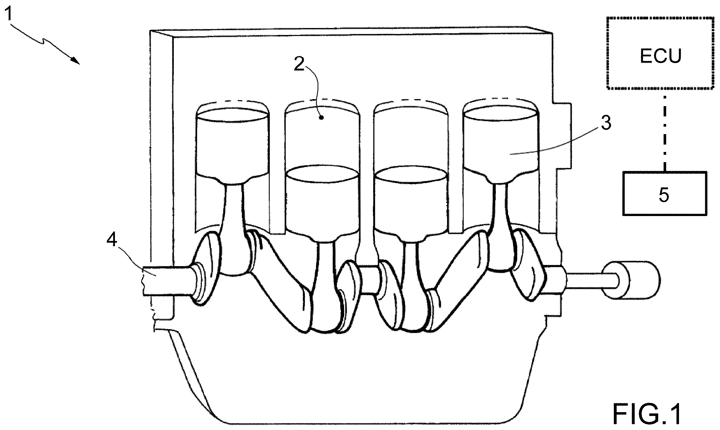

In Figure 1, number 1 indicates as a whole a spontaneously-started internal combustion engine (i.e. in internal combustion engines operating according to the "Diesel" cycle and powered by diesel fuel or the like).

The internal combustion engine 1 comprises four injectors (not shown) injecting the fuel in four cylinders 2 arranged in a line, each of which houses a respective piston 3 mechanically connected by a connecting rod to a crankshaft 4 to transmit to said crankshaft 4 the force generated by the combustion inside the cylinder 2.

The internal combustion engine 1 is controlled by an electronic control unit ECU supervising the operation of all the components of the internal combustion engine 1. It is also provided a control system including at least one sensor 5 connected to the electronic control unit ECU.

In particular, according to a preferred embodiment, the sensor 5 is an acoustic pressure level sensor, i.e. a microphone 5, which is connected to the electronic control unit ECU and can detect the intensity of the combustion noise generated in the cylinders 2. The microphone 5 is arranged so as to detect the intensity of the combustion noise generated in the cylinders 2; in particular the microphone is arranged in a position facing and close to the cylinders 2 and preferably sheltered from any environmental noise so as not to be excessively affected by the environmental noise (e.g. produced by horns, by the turbocharger rotation, if any, by the traffic, etc.).

It is hereinafter described the control strategy of the combustion noise implemented by the electronic control unit ECU based on the signal acquired by the sensor 5.

The strategy provides for the alternation of combustion cycles with a single main fuel injection and combustion cycles with a plurality of injections.

The combustion cycles with a single main fuel injection (hereinafter referred to as mono-injection or modified mode) are characterized by a reduced emission of particulates at the expense of high noise and increased NOx emissions.

The combustion cycles with a plurality of fuel injections (hereinafter referred to as multi-injection or standard mode) are characterized by a rather contained noise and reduced NOx emissions at the expense of a high emission of particulates.

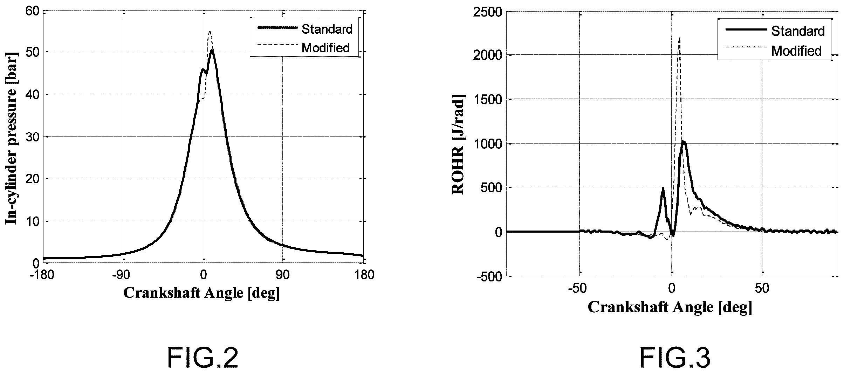

The number of fuel injections in the multi-injection mode is determined based on the engine point and is in any case variable between 2 and 4 injections. Figures 2 and 3 compare a combustion cycle with a single main fuel injection (indicated with "modified") and a combustion cycle with a plurality of fuel injections (indicated with "standard"). The pressure generated inside the combustion chamber of the cylinder 2 has a similar trend in the mono-injection and in the multi-injection modes; the mono-injection mode reaches a pressure peak value slightly higher than the pressure peak value in the multi-injection mode. Conversely, the heat released in the combustion chamber of the cylinder 2 has a profoundly different trend in the mono-injection and in the multi-injection modes. The mono-injection mode reaches a heat peak value, which is more than twice the heat peak value of the multi-injection mode; the heat trend generated in the multi-injection mode shows two peaks, each of which is associated with a respective injection.

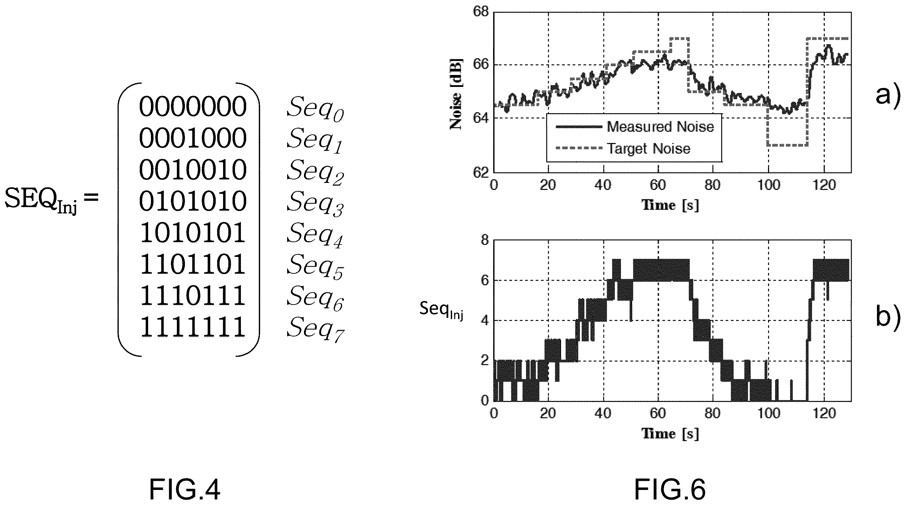

In a preliminary setup step, the strategy determines a number of sequences SEQ_{Inj}, each of which comprises the same number of combustion cycles to be carried out and wherein each of said sequences SEQ_{Inj} is carried out through combustion cycles with a single main fuel injection or through combustion cycles with a plurality of partial fuel injections or through the alternation of combustion cycles with a single main fuel injection and combustion cycles with a plurality of partial fuel injections. Figure 4 shows eight different sequences of injections, wherein the code 0 identifies a combustion cycle with a plurality of fuel injections, while the code 1 identifies a combustion cycle with a single main fuel injection. Each sequence SEQ_{Inj} comprises the same number of codes 0 or 1; in other words, each SEQ_{Inj} sequence is identified by the same number of combustion cycles.

Each sequence SEQ_{Inj} comprises a number of combustion cycles comprised between four and nine, preferably seven combustion cycles.

The sequence indicated by SEQ₀ in Figure 4 is composed of seven combustion cycles with a plurality of fuel injections, while the sequence indicated by SEQ₇ in Figure 4 is composed of seven combustion cycles with a single main fuel injection. Between the two sequences indicated with SEQ₀ and Seq₇ it is included a number of intermediate sequences (in particular, six intermediate sequences) alternating the codes 0 and 1; in other words, cycles of sequences alternating combustion cycles with a single main fuel injection and combustion cycles with a plurality of fuel injections. In particular, the intermediate sequences comprised between SEQ₁ and SEQ₆ are marked by a growing incidence of figures 1, i.e. a progressively increasing number of combustion cycles with a single main fuel injection and, consequently, a decreasing incidence of figures 0, i.e. a gradually decreasing number of combustion cycles with a plurality of fuel injections.

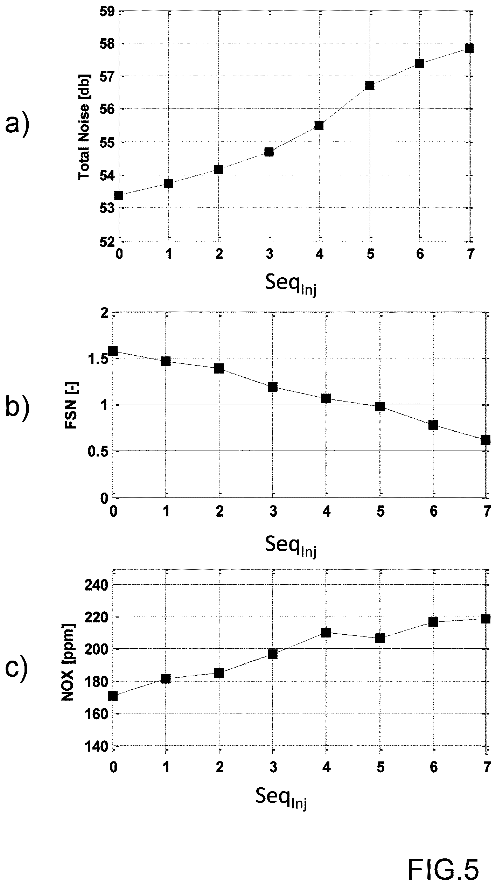

As shown in Figures 5a to 5c, the aforesaid sequences SEQ_{Inj} are characterized by an increasing noise trend generated during the entire sequence of combustion cycles starting from the sequence SEQ₀ composed of seven combustion cycles with a plurality of fuel injections to reach the sequence SEQ₇ composed of seven combustion cycles with a single main fuel injection. Analogously, the NOx emissions produced during the entire sequence of combustion cycles have an increasing trend starting from the sequence SEQ₀ composed of seven combustion cycles with a plurality of fuel injections to reach the sequence SEQ₇ composed of seven combustion cycles with a single main fuel injection. On the other hand, the particulate generated during the entire sequence of combustion cycles has a decreasing trend starting from the sequence SEQ₀ composed of seven combustion cycles with a plurality of fuel injections to reach the sequence SEQ₇ composed of seven combustion cycles with a single main fuel injection.

Obviously, the intermediate sequences between SEQ₁ and SEQ₆ are characterized by intermediate values relating to the noise generated during the entire sequence of combustion cycles, the NOx emissions produced during the entire sequence of combustion cycles and the particulate generated during the entire sequence of combustion cycles.

The electronic control unit ECU is then provided to acquire the signal coming from the sensor 5.

The electronic control unit ECU receives the input signal detected by the sensor 5, which is suitably processed by using an algorithm known as FFT Fourier (Fast Fourier Transform) and then by applying a filter of known type (in particular a weighing curve A, also known as A-weighting filter). The processing of the signal detected by the sensor 5 is described in detail in the publication "Diesel Engine Acoustic Emission Analysis for Combustion Control", SAE International 2012-01-1338, incorporated here for reference, that allows recognizing the noise emitted by each of the cylinders 2.

During the normal operation of the internal combustion engine 1, the electronic control unit ECU is configured to determine a reference combustion noise NOISE_{T}; a possible trend of the reference combustion noise NOISE_{T} is shown in Figure 6 (indicated as target noise).

According to a preferred embodiment, the reference combustion noise NOISE_{T} is determined by the electronic control unit ECU based on the emissions produced by the internal combustion engine 1, in particular based on the particulate and NOx generated during the combustion. According to a preferred embodiment, the reference combustion noise NOISE_{T} is determined by the electronic control unit ECU based on the operating conditions of the vehicle, such as e.g. the number of revolutions of the engine, the engine load and the vehicle speed.

Once determined the reference combustion noise NOISE_{T}, the electronic control unit ECU is configured to determine the succession of sequences SEQ_{Inj} to be carried out for obtaining the reference combustion noise NOISE_{T}.

In particular, the electronic control unit ECU controls the succession of sequences SEQ_{Inj} to be carried out by means of a feedback control using as a feedback variable the combustion noise detected by the sensor 5; the combustion noise is detected in real time by the sensor 5 housed close to the cylinders 2 and connected to the electronic control unit ECU.

In other words, the electronic control unit ECU sets the succession of sequences SEQ_{Inj} to be carried out through the comparison between the combustion noise detected by the sensor 5 and the reference combustion noise NOISE_{T} to cancel the error between the combustion noise detected by the sensor 5 and the reference combustion noise NOISE_{T}.

It has been experimentally found that a closed-loop control of the aforesaid type, which allows determining the succession of sequences SEQ_{Inj} to be carried out for obtaining the reference combustion noise NOISE_{T} and which uses as a feedback variable the combustion noise detected by the sensor 5, allows obtaining very satisfactory performances. As shown in Figure 6a, the combustion noise trend generated by the succession of sequences SEQ_{Inj} to be carried out (indicated as Measured Noise) is rather similar to the trend of the reference combustion noise NOISE_{T} (indicated as Target Noise).

The combustion noise trend generated by the succession of sequences SEQ_{Inj} to be carried out is obtained through the succession over time of the sequences SEQ_{Inj} represented in Figure 6b.

It has been verified that for low values of combustion noise (slightly higher than 64 db) the sequences SEQ₀, Seq₁, Seq₂ (having prevailing combustion cycles with a plurality of fuel injections indicated by a reduced combustion noise) are sequentially carried out; for intermediate values of combustion noise (ranging from 64 to 66 db) mainly the sequences SEQ₃, Seq₄, Seq₅ (alternating combustion cycles with a main fuel injection, characterized by a high combustion noise, and combustion cycles with a plurality of fuel injections characterized by a reduced combustion noise) are sequentially carried out; while for high values of combustion noise (equal to or higher than 66 db) mainly the sequences SEQ₆, Seq₇ (having prevailing combustion cycles with a main fuel injection characterized by a high combustion noise) are sequentially carried out. The previous description explicitly refers to the case in which there is an acoustic pressure level sensor 5, i.e. a microphone 5, but it can be advantageously replaced by an accelerometer 5 connected to the electronic control unit ECU.

According to a less favorable embodiment, the sensor 5 is a pressure sensor 5 arranged through the crown end of each cylinder 2, connected to the electronic control unit ECU and configured to detect the pressure waves generated by the compressed gases inside the respective cylinder 2 for each combustion cycle. This latter embodiment allows detecting only the component of the combustion noise generated by the combustion inside the combustion chambers of the cylinders 2, but not detecting the component of the combustion noise generated by the transmission through the other components of the spontaneously-started internal combustion engine 1.

It is also clear that the electronic control unit ECU is configured to inject the fuel flow rate supplied by the engine control for a given combustion cycle (e.g. determined through a model based on parameters such as the driving torque request by the driver, the speed of the internal combustion engine 1, the air temperature T_{AIR} and the cooling fluid temperature T_{H2O}) both with a single main fuel injection and with a plurality of fuel injections, so as to ensure the same driving torque without causing any discontinuity to the driver of the vehicle.

This aim is also guaranteed by the electronic control unit ECU, which is configured so as to ensure the correct value of the start of injection angle SOI both with a single main fuel injection and with a plurality of fuel injections.

The electronic control unit ECU calculates for each combustion cycle the total fuel flow rate to be injected and the value of the start of injection angle SOI; and for the combustion cycles with a plurality of partial fuel injections, the electronic control unit ECU also determines the fuel flow rate to be injected for each partial fuel injection and the distance between two subsequent partial injections based on the total fuel flow rate to be injected and the value of the start of injection angle SOI.

The method to control the combustion noise generated by the spontaneously-started internal combustion engine 1 as described heretofore has numerous advantages.

First, it allows detecting and controlling the combustion noise efficiently (i.e. with an adequate accuracy), effectively (i.e. quickly and without engaging an excessive computing power), and inexpensively (i.e. without requiring the installation of further expensive components beside those normally present). While being advantageous in terms of costs, easy and inexpensive to implement, the aforesaid method does not require information from expensive pressure sensors arranged in the combustion chamber of the cylinders and allows a reliable recognition of the component of the combustion noise generated by the combustion inside the combustion chambers of the cylinders and of the component of the combustion noise generated by the transmission through the other components of the spontaneously-started internal combustion engine.

It has been experimentally verified that determining the sequence SEQ_{Inj} of combustion cycles to be carried out allows minimizing the error between the combustion noise detected by the sensor 5 and the reference combustion noise NOISE_{T} and obtaining a decidedly improved performance (in terms of noise) if compared to the simple choice between a single main injection or a multi-injection mode.

## Claims

1. A method to control the combustion noise generated by a spontaneously-started internal combustion engine (1) provided with a number of cylinders (2) and comprising a sensor (5), which is designed to detect the intensity of the combustion noise generated by the combustion in the cylinders (2) and is preferably arranged in a position facing and close to the cylinders (2); the method comprising the steps of:
determining, in a preliminary setup step, a plurality of sequences (SEQ_{Inj}) of combustion cycles to be carried out; wherein each of said sequences (SEQ_{Inj}) comprises the same number of combustion cycles to be carried out and the plurality of sequences (SEQ_{Inj}) comprises a sequence (SEQ_{Inj}) taking place through combustion cycles with a single main fuel injection and a sequence (SEQ_{Inj}) taking place through combustion cycles with a plurality of partial fuel injections and a plurality of sequences (SEQ_{Inj}) taking place through the alternation of combustion cycles with a single main fuel injection and combustion cycles with a plurality of partial fuel injections;
detecting, through the sensor (5), the intensity of the combustion noise generated by the combustion in the cylinders (2) during the normal operation of the spontaneously-started internal combustion engine (1);
calculating a reference combustion noise (NOISE_{T}); and
determining the succession of the sequences (SEQ_{Inj}) of combustion cycles to be carried out to obtain the reference combustion noise (NOISE_{T}) through a feedback control, which employs, as a feedback variable, the intensity of the combustion noise generated by the combustion in the cylinders (2) and detected by the sensor (5).

2. A method according to claim 1 and comprising the further step of determining the succession of the sequences (SEQ_{Inj}) of the combustion cycles to be carried out by comparing the combustion noise detected by the sensor (5) and the reference combustion noise (NOISE_{T}) to cancel the error between the combustion noise detected by the sensor (5) and the reference combustion noise (NOISE_{T}).

3. A method according to claim 1 or 2, wherein the sensor (5) is a sound pressure level sensor, i.e. a microphone (5).

4. A method according to claim 1 or 2, wherein the sensor (5) is an accelerometer (5).

5. A method according to any one of the preceding claims, wherein the reference combustion noise (NOISE_{T}) is calculated based on the operating conditions of the vehicle, such as the number of revolutions per minute, the load and the speed of the vehicle.

6. A method according to any one of the preceding claims, wherein the reference combustion noise (NOISE_{T}) is calculated based on the emissions produced by the spontaneously-started internal combustion engine (1), in particular based on the particulate and the NOx generated during the combustion.

7. A method according to any one of the preceding claims, wherein, for the combustion cycles with a plurality of partial fuel injections, the number of fuel injections is determined based on the engine point and is preferably variable between 2 and 4 partial injections.

8. A method according to any one of the preceding claims and comprising the further step of determining, for each combustion cycle, the total fuel flow rate to be injected and the value of the start of injection angle (SOI) .

9. A method according to claim 8, wherein, for the combustion cycles with a plurality of partial fuel injections, the method comprises the further step of determining the fuel flow rate to be injected for each partial fuel injection and the distance between two following partial fuel injections based on the total fuel flow rate to be injected and the value of the start of injection angle (SOI).

10. A method according to any one of the preceding claims and comprising the further steps of processing the signal detected by the sensor (5) by performing a fast Fourier transform (FFT); and subsequently applying an A-weighting filter.

11. A method according to any one of the preceding claims, wherein the sensor (5) is a pressure sensor (5) arranged through the crown end of each cylinder (2) and designed to detect the pressure waves generated by the gases compressed inside the respective cylinder (2) for each combustion cycle.

12. A method according to any one of the preceding claims, wherein each of said sequences (SEQ_{Inj}) comprises a number of combustion cycles comprised between four and nine, preferably seven combustion cycles.

## Patentansprüche

1. Verfahren zur Kontrolle des Verbrennungsgeräusches, das von einem Selbstzünder-Verbrennungsmotor (1) erzeugt wird, der mit einer Anzahl von Zylindern (2) versehen ist und einen Sensor (5) umfasst, der dazu ausgebildet ist, die Intensität des Verbrennungsgeräusches zu erfassen, das durch die Verbrennung in den Zylindern (2) erzeugt wird, und der vorzugsweise an einer Position angeordnet ist, die den Zylindern (2) zugewandt ist und sich in deren Nähe befindet; wobei das Verfahren die Schritte umfasst:
Bestimmen einer Vielzahl von Sequenzen (SEQ_{Inj}) von auszuführenden Verbrennungszyklen in einem vorbereitenden Einrichtungsschritt; wobei jede der Sequenzen (SEQ_{Inj}) die gleiche Anzahl von auszuführenden Verbrennungszyklen umfasst und die Vielzahl von Sequenzen (SEQ_{Inj}) eine Sequenz (SEQ_{Inj}), die durch Verbrennungszyklen mit einer einzigen Hauptkraftstoffeinspritzung stattfindet, und eine Sequenz (SEQ_{Inj}), die durch Verbrennungszyklen mit einer Vielzahl von Teilkraftstoffeinspritzungen stattfindet, und eine Vielzahl von Sequenzen (SEQ_{Inj}), die durch die Abwechslung von Verbrennungszyklen mit einer einzigen Hauptkraftstoffeinspritzung und Verbrennungszyklen mit einer Vielzahl von Teilkraftstoffeinspritzungen stattfindet, umfasst;
Erfassen der Intensität des Verbrennungsgeräusches, das durch die Verbrennung in den Zylindern (2) während des normalen Betriebs des Selbstzünder-Verbrennungsmotors (1) erzeugt wird, durch den Sensor (5);
Berechnen eines Referenzverbrennungsgeräusches (NOISE_{T}); und
Bestimmen der Abfolge der Sequenzen (SEQ_{Inj}) von auszuführenden Verbrennungszyklen, um das Referenzverbrennungsgeräusch (NOISE_{T}), zu erhalten, durch eine Regelung mit Rückkopplung, die als Rückkopplungsvariable die Intensität des Verbrennungsgeräusches verwendet, das durch die Verbrennung in den Zylindern (2) erzeugt und durch den Sensor (5) erfasst wird.

2. Verfahren nach Anspruch 1, das den weiteren Schritt umfasst, die Abfolge der Sequenzen (SEQ_{Inj}) der auszuführenden Verbrennungszyklen zu bestimmen, indem das von dem Sensor (5) erfasste Verbrennungsgeräusch und das Referenzverbrennungsgeräusch (NOISE_{T}) verglichen werden, um den Fehler zwischen dem von dem Sensor (5) erfassten Verbrennungsgeräusch und dem Referenzverbrennungsgeräusch (NOISET) zu eliminieren.

3. Verfahren nach Anspruch 1 oder 2, wobei der Sensor (5) ein Schalldruckpegelsensor, d.h. ein Mikrofon (5), ist.

4. Verfahren nach Anspruch 1 oder 2, wobei der Sensor (5) ein Beschleunigungsmesser (5) ist.

5. Verfahren nach einem der vorangehenden Ansprüche, wobei das Referenzverbrennungsgeräusch (NOISE_{T}) auf der Grundlage der Betriebsbedingungen des Fahrzeugs, wie der Anzahl der Umdrehungen pro Minute, der Last und der Geschwindigkeit des Fahrzeugs, berechnet wird.

6. Verfahren nach einem der vorhergehenden Ansprüche, wobei das Referenzverbrennungsgeräusch (NOISE_{T}) auf der Grundlage der von dem Selbstzünder-Verbrennungsmotor (1) erzeugten Emissionen berechnet wird, insbesondere auf der Grundlage der bei der Verbrennung erzeugten Partikel und des NOX.

7. Verfahren nach einem der vorangehenden Ansprüche, wobei für die Verbrennungszyklen mit mehreren Teilkraftstoffeinspritzungen die Anzahl der Kraftstoffeinspritzungen auf der Grundlage des Motorarbeitspunktes bestimmt wird und vorzugsweise zwischen 2 und 4 Teileinspritzungen variabel ist.

8. Verfahren nach einem der vorangehenden Ansprüche, das den weiteren Schritt umfasst, für jeden Verbrennungszyklus den gesamten einzuspritzenden Kraftstoffdurchsatz und den Wert des Einspritzanfangswinkels (SOI) zu bestimmen.

9. Verfahren nach Anspruch 8, wobei das Verfahren für die Verbrennungszyklen mit mehreren Teilkraftstoffeinspritzungen den weiteren Schritt umfasst, den für jede Teilkraftstoffeinspritzung einzuspritzenden Kraftstoffdurchsatz und den Abstand zwischen zwei folgenden Teilkraftstoffeinspritzungen auf der Grundlage des gesamten einzuspritzenden Kraftstoffdurchsatzes und des Wertes des Einspritzanfangswinkels (SCI) zu bestimmen.

10. Verfahren nach einem der vorangehenden Ansprüche, das die weiteren Schritte umfasst: Verarbeiten des vom Sensor (5) erfassten Signals mittels Durchführen einer schnellen Fourier-Transformation (FFT); und anschließendes Anwenden eines A-Gewichtungsfilters.

11. Verfahren nach einem der vorangehenden Ansprüche, wobei der Sensor (5) ein Drucksensor (5) ist, der durch das Kopfende des jeweiligen Zylinders (2) hindurch angeordnet ist und dazu ausgebildet ist, die Druckwellen zu erfassen, die von den in dem jeweiligen Zylinder (2) komprimierten Gasen bei jedem Verbrennungszyklus erzeugt werden.

12. Verfahren nach einem der vorangehenden Ansprüche, wobei jede der Sequenzen (SEQ_{Inj}) eine Anzahl von Verbrennungszyklen umfasst, die zwischen vier und neun, vorzugsweise bei sieben Verbrennungszyklen liegt.

## Revendications

1. Méthode pour réguler le bruit de combustion généré par un moteur à combustion interne démarré spontanément (1) doté d'un nombre de cylindres (2) et comprenant un capteur (5), qui est conçu pour détecter l'intensité du bruit de combustion généré par la combustion dans les cylindres (2) et est de préférence agencé à une position orientée vers les cylindres (2) et proche de ceux-ci ; la méthode comprenant les étapes consistant à :
déterminer, à une étape de configuration préliminaire, une pluralité de séquences (SEQ_{Inj}) de cycles de combustion à réaliser ; dans laquelle chacune desdites séquences (SEQ_{Inj}) comprend le même nombre de cycles de combustion à réaliser et la pluralité de séquences (SEQ_{Inj}) comprend une séquence (SEQ_{Inj}) intervenant par l'intermédiaire de cycles de combustion avec une injection principale de carburant unique et une séquence (SEQ_{Inj}) intervenant par l'intermédiaire de cycles de combustion avec une pluralité d'injections partielles de carburant et une pluralité de séquences (SEQ_{Inj}) intervenant par l'intermédiaire de l'alternance de cycles de combustion avec une injection principale de carburant unique et de cycles de combustion avec une pluralité d'injections partielles de carburant ;
détecter, par l'intermédiaire du capteur (5), l'intensité du bruit de combustion généré par la combustion dans les cylindres (2) au cours du fonctionnement normal du moteur à combustion interne démarré spontanément (1) ;
calculer un bruit de combustion de référence (NOISE_{T}) ; et
déterminer la succession des séquences (SEQ_{Inj}) de cycles de combustion à réaliser pour obtenir le bruit de combustion de référence (NOISE_{T}) par l'intermédiaire d'une commande de rétroaction, qui emploie, en tant qu'une variable de rétroaction, l'intensité du bruit de combustion généré par la combustion dans les cylindres (2) et détecté par le capteur (5).

2. Méthode selon la revendication 1 et comprenant l'étape supplémentaire de la détermination de la succession des séquences (SEQ_{Inj}) des cycles de combustion à réaliser par la comparaison du bruit de combustion détecté par le capteur (5) et du bruit de combustion de référence (NOISE_{T}) pour annuler l'erreur entre le bruit de combustion détecté par le capteur (5) et le bruit de combustion de référence (NOISE_{T}).

3. Méthode selon la revendication 1 ou 2, dans laquelle le capteur (5) est un capteur de niveau de pression sonore, c'est-à-dire un microphone (5).

4. Méthode selon la revendication 1 ou 2, dans laquelle le capteur (5) est un accéléromètre (5).

5. Méthode selon l'une quelconque des revendications précédentes, dans laquelle le bruit de combustion de référence (NOISE_{T}) est calculé sur la base des conditions de fonctionnement du véhicule, comme le nombre de tours par minute, la charge et la vitesse du véhicule.

6. Méthode selon l'une quelconque des revendications précédentes, dans laquelle le bruit de combustion de référence (NOISE_{T}) est calculé sur la base des émissions produites par le moteur à combustion interne démarré spontanément (1), en particulier sur la base des particules et du NOx générés au cours de la combustion.

7. Méthode selon l'une quelconque des revendications précédentes, dans laquelle, pour les cycles de combustion avec une pluralité d'injections partielles de carburant, le nombre d'injections de carburant est déterminé sur la base du point de moteur et de préférence variable entre deux et quatre injections partielles.

8. Méthode selon l'une quelconque des revendications précédentes et comprenant l'étape supplémentaire consistant à déterminer, pour chaque cycle de combustion, le débit de carburant total à injecter et la valeur de l'angle de début d'injection (SOI) .

9. Méthode selon la revendication 8, dans laquelle, pour les cycles de combustion avec une pluralité d'injections partielles de carburant, la méthode comprend l'étape supplémentaire consistant à déterminer le débit de carburant à injecter pour chaque injection partielle de carburant et la distance entre deux injections partielles de carburant successives sur la base du débit de carburant total à injecter et de la valeur de l'angle de début d'injection (SOI).

10. Méthode selon l'une quelconque des revendications précédentes et comprenant les étapes supplémentaires du traitement du signal détecté par le capteur (5) par la réalisation d'une transformée de Fourier rapide (FFT) ; puis de l'application d'un filtre de pondération A.

11. Méthode selon l'une quelconque des revendications précédentes, dans laquelle le capteur (5) est un capteur de pression (5) agencé à travers l'extrémité de couronne de chaque cylindre (2) et conçu pour détecter les ondes de pression générées par les gaz comprimés à l'intérieur du cylindre (2) respectif pour chaque cycle de combustion.

12. Méthode selon l'une quelconque des revendications précédentes, dans laquelle chacune desdites séquences (SEQ_{Inj}) comprend un nombre de cycles de combustion compris entre quatre et neufs, de préférence sept cycles de combustion.
